# EUROPEAN PATENT APPLICATION

(11) **EP 3 934 176 A1**
(43) Date of publication of application: **05.01.2022**
(21) Application number: 20196848.4
(22) Date of filing: 18.09.2020
(51) Int. Cl.: H04L 12/26, H04L 12/24

(54) **APPLICATION FLOW MONITORING**

(30) Priority: 30.06.2020 US 202016917690
(71) Applicant: Juniper Networks, Inc., Sunnyvale, CA 94089 (US)
(72) Inventor: CHITALIA, Harshit Naresh, Sunnyvale, CA California 94089 (US); KAR, Anita, Sunnyvale, CA California 94089 (US); PATKI, Neeren Shripad, Sunnyvale, CA California 94089 (US)
(74) Representative: D Young & Co LLP

(57) **Abstract**

A computing system stores rule data for an application. The rule data for the application specifies characteristics of flows that occur within a network and that are associated with the application. The computing system may collect a stream of flow datagrams from the network. Additionally, the computing system may identify, based on the rule data for the application, flow datagrams in the stream of flow datagrams that are associated with the application. The computing system may generate a stream of application-enriched flow datagrams based on the identified flow datagrams. The application-enriched flow datagrams include data indicating the application. Furthermore, the computing system may process a query for results based on the application-enriched flow datagrams.

## Description

### TECHNICAL FIELD

This disclosure relates to analysis of computer networks.

### BACKGROUND

Virtualized data centers are becoming a core foundation of the modern information technology (IT) infrastructure. Modern data centers have extensively utilized virtualized environments in which virtual hosts, such virtual machines or containers, are deployed and executed on an underlying compute platform of physical computing devices.

Virtualization within a large-scale data center can provide several advantages, including efficient use of computing resources and simplification of network configuration. Thus, enterprise IT staff often prefer virtualized compute clusters in data centers for their management advantages in addition to the efficiency and increased return on investment (ROI) that virtualization provides. However, virtualization can cause some challenges when analyzing, evaluating, and/or troubleshooting the operation of the network.

### SUMMARY

Particular aspects are set out in the appended independent claims. Various optional embodiments are set out in the dependent claims.

This disclosure describes techniques for application flow monitoring. Application flow monitoring includes a process of monitoring traffic flows within a network that are associated with specific applications. Application flow monitoring may enable network administrators to attain better understandings of networks they are administering, enable automation of specific network administration tasks, and/or perform other activities.

As described in this disclosure, a computing system may store rule data for an application. The rule data for the application specifies characteristics of flows that occur within a network and that are associated with the application. Furthermore, the computing system may collect a stream of flow datagrams from the network. The computing system may use the rule data for the application to generate a stream of application-enriched flow datagrams. To generate the stream of application-enriched flow datagrams, the computing system may apply the rule data for the application to identify flow datagrams in the stream of flow datagrams that are associated with the application. The computing system may generate the application-enriched flow datagrams based on the identified flow datagrams. For instance, the computing system may generate the application-enriched flow datagrams by modifying the identified flow datagrams to indicate the application. The computing system may store the application-enriched flow datagrams, or data generated based on the application-enriched flow datagrams, in a database. Furthermore, the computing system may execute queries that return results based on the application-enriched flow datagrams. The ability to execute such queries may enable network administrators to optimize the network, automate network administration tasks, or perform other activities that adjust or improve the functionality of the network.

In one example, this disclosure describes a method includes a method for application flow monitoring, the method comprising: storing, by a computing system, rule data for an application, wherein the rule data for the application specifies characteristics of flows that occur within a network and that are associated with the application; collecting, by the computing system, a stream of flow datagrams from the network; identifying, by the computing system, based on the rule data for the application, flow datagrams in the stream of flow datagrams that are associated with the application; generating, by the computing system, a stream of application-enriched flow datagrams based on the identified flow datagrams, wherein the application-enriched flow datagrams include data that indicate the application; and processing, by the computing system, a query for results based on the application-enriched flow datagrams.

In another example, this disclosure describes a computing system comprising: storage devices configured to store rule data for an application, wherein the rule data for the application specifies characteristics of flows that occur within a network and that are associated with the application; and one or more processors having access to the storage devices and configured to: collect a stream of flow datagrams from the network; identify, based on the rule data for the application, flow datagrams in the stream of flow datagrams that are associated with the application; generate a stream of application-enriched flow datagrams based on the identified flow datagrams, wherein the application-enriched flow datagrams include data that indicate the application; and process a query for results based on the application-enriched flow datagrams.

In another example, this disclosure describes a computer-readable medium comprising instructions for causing a programmable processor to: store rule data for an application, wherein the rule data for the application specifies characteristics of flows that occur within a network and that are associated with the application; collect a stream of flow datagrams from the network; identify, based on the rule data for the application, flow datagrams in the stream of flow datagrams that are associated with the application; generate a stream of application-enriched flow datagrams based on the identified flow datagrams, wherein the application-enriched flow datagrams include data that indicate the application; and process a query for results based on the application-enriched flow datagrams.

The details of one or more examples are set forth in the accompanying drawings and the description below. Other features, objects, and advantages will be apparent from the description and drawings, and from the claims.

### BRIEF DESCRIPTION OF DRAWINGS

FIG. 1A is a conceptual diagram illustrating an example network that includes a system for analyzing traffic flows across a network and/or within a data center, in accordance with one or more aspects of the present disclosure.
FIG. 1B a conceptual diagram illustrating example components of a system for analyzing traffic flows across a network and/or within a data center, in accordance with one or more aspects of the present disclosure.
FIG. 2 is a block diagram illustrating an example network for analyzing traffic flows across a network and/or within a data center, in accordance with one or more aspects of the present disclosure.
FIG. 3 is a block diagram illustrating an example interaction of components of a network analysis system to monitor application flows in accordance with one or more aspects of the present disclosure.
FIG. 4 is a conceptual diagram illustrating an example interface for configuring a new application in accordance with one or more aspects of the present disclosure.
FIG. 5 is a conceptual diagram illustrating an example interface for adding rules to an application in accordance with one or more aspects of the present disclosure.
FIG. 6 is a flowchart illustrating an example method in accordance with one or more techniques of this disclosure.

### DETAILED DESCRIPTION

Data centers that use virtualized environments in which virtual hosts, such virtual machines or containers, are deployed and executed on an underlying compute platform of physical computing devices provide efficiency, cost, and organizational advantages. Yet obtaining meaningful insights into application workloads is nevertheless important in managing any data center fabric. Collecting flow datagrams, which may include traffic samples) from networking devices may help provide such insights. In accordance with one or more aspects of this disclosure, a computing system may use a set of rules to enrich the flow datagrams with application identifiers. In various examples described herein, such application-enriched flow datagrams may be collected and then processed by analytics algorithms, thereby making it possible to perform application flow monitoring. In some examples, a user interface may be generated to enable visualization of the data collected and how the underlay infrastructure correlates with various overlay networks. Presentation of such data in a user interface may provide insights into the network, and provide users, administrators, and/or other personnel with tools for network discovery, investigation, and troubleshooting.

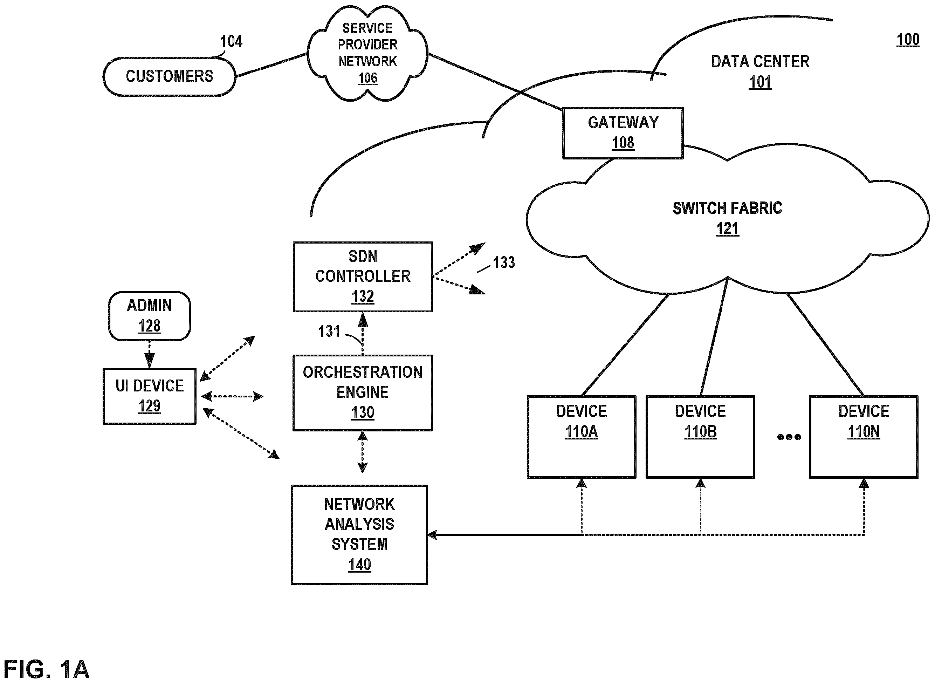

FIG. 1A is a conceptual diagram illustrating an example network that includes a system for analyzing traffic flows across a network and/or within a data center, in accordance with one or more aspects of the present disclosure. FIG. 1A illustrates one example implementation of a network system 100 and a data center 101 that hosts one or more computing networks, computing domains or projects, and/or cloud-based computing networks generally referred to herein as cloud computing cluster. The cloud-based computing clusters and may be co-located in a common overall computing environment, such as a single data center, or distributed across environments, such as across different data centers. Cloud-based computing clusters may, for example, be different cloud environments, such as various combinations of OpenStack cloud environments, Kubernetes cloud environments or other computing clusters, domains, networks and the like. Other implementations of network system 100 and data center 101 may be appropriate in other instances. Such implementations may include a subset of the components included in the example of FIG. 1A and/or may include additional components not shown in FIG. 1A.

In the example of FIG. 1A, data center 101 provides an operating environment for applications and services for customers 104 coupled to data center 101 by service provider network 106. Although functions and operations described in connection with network system 100 of FIG. 1A may be illustrated as being distributed across multiple devices in FIG. 1A, in other examples, the features and techniques attributed to one or more devices in FIG. 1A may be performed internally by local components of one or more of such devices. Similarly, one or more of such devices may include certain components and may perform various techniques that may otherwise be attributed in this disclosure to one or more other devices. Further, this disclosure may describe certain operations, techniques, features, and/or functions in connection with FIG. 1A or otherwise as performed by specific components, devices, and/or modules. In other examples, other components, devices, or modules may perform such operations, techniques, features, and/or functions. Accordingly, some operations, techniques, features, and/or functions attributed to one or more components, devices, or modules may be attributed to other components, devices, and/or modules, even if not specifically described herein in such a manner.

Data center 101 hosts infrastructure equipment, such as networking and storage systems, redundant power supplies, and environmental controls. Service provider network 106 may be coupled to one or more networks administered by other providers and may thus form part of a large-scale public network infrastructure, e.g., the Internet.

In some examples, data center 101 may represent one of many geographically distributed network data centers. As illustrated in the example of FIG. 1A, data center 101 is a facility that provides network services for customers 104. Customers 104 may be collective entities such as enterprises and governments or individuals. For example, a network data center may host web services for several enterprises and end users. Other exanmple services may include data storage, virtual private networks, traffic engineering, file service, data mining, scientific- or super-computing, and so on. In some examples, data center 101 is an individual network server, a network peer, or otherwise.

In the example of FIG. 1A, data center 101 includes a set of storage systems, application servers, compute nodes, or other devices, including network device 110A through network device 110N (collectively "network devices 110," representing any number of network devices). Devices 110 may be interconnected via high-speed switch fabric 121 provided by one or more tiers of physical network switches and routers. In some examples, devices 110 may be included within fabric 121, but are shown separately for ease of illustration. Network devices 110 may be any of a number of different types of network devices (core switches, spine network devices, leaf network devices, edge network devices, or other network devices), but in some examples, one or more devices 110 may serve as physical compute nodes of the data center. For example, one or more of devices 110 may provide an operating environment for execution of one or more customer-specific virtual machines or other virtualized instances, such as containers. In such an example, one or more of devices 110 may be alternatively referred to as a host computing device or, more simply, as a host. A network device 110 may thereby execute one or more virtualized instances, such as virtual machines, containers, or other virtual execution environment for running one or more services, such as virtualized network functions (VNFs).

In general, each of network devices 110 may be any type of device that operates on a network and which may generate data (e.g., flow datagrams, sFlow datagrams, NetFlow datagrams, etc.) accessible through telemetry or otherwise, which may include any type of computing device, sensor, camera, node, surveillance device, or other device. Further, some or all of network devices 110 may represent a component of another device, where such a component may generate data collectible through telemetry or otherwise. For example, some or all of network devices 110 may represent physical or virtual network devices, such as switches, routers, hubs, gateways, security devices such as firewalls, intrusion detection, and/or intrusion prevention devices.

Although not specifically shown, switch fabric 121 may include top-of-rack (TOR) switches coupled to a distribution layer of chassis switches, and data center 101 may include one or more non-edge switches, routers, hubs, gateways, security devices such as firewalls, intrusion detection, and/or intrusion prevention devices, servers, computer terminals, laptops, printers, databases, wireless mobile devices such as cellular phones or personal digital assistants, wireless access points, bridges, cable modems, application accelerators, or other network devices. Switch fabric 121 may perform layer 3 routing to route network traffic between data center 101 and customers 104 by service provider network 106. Gateway 108 acts to forward and receive packets between switch fabric 121 and service provider network 106.

Software-Defined Networking ("SDN") controller 132 provides a logically and, in some cases, physically centralized controller for facilitating operation of one or more virtual networks within data center 101 in accordance with one or more examples of this disclosure. In some examples, SDN controller 132 operates in response to configuration input received from orchestration engine 130 via northbound API 131, which in turn may operate in response to configuration input received from an administrator 128 interacting with and/or operating user interface device 129.

User interface device 129 may be implemented as any suitable device for presenting output and/or accepting user input. For instance, user interface device 129 may include a display. User interface device 129 may be a computing system, such as a mobile or non-mobile computing device operated by a user and/or by administrator 128. User interface device 129 may, for example, represent a workstation, a laptop or notebook computer, a desktop computer, a tablet computer, or any other computing device that may be operated by a user and/or present a user interface in accordance with one or more aspects of the present disclosure. In some examples, user interface device 129 may be physically separate from and/or in a different location than controller 201. In such examples, user interface device 129 may communicate with controller 201 over a network or other means of communication. In other examples, user interface device 129 may be a local peripheral of controller 201 or may be integrated into controller 201.

In some examples, orchestration engine 130 manages functions of data center 101 such as compute, storage, networking, and application resources. For example, orchestration engine 130 may create a virtual network for a tenant within data center 101 or across data centers. Orchestration engine 130 may attach virtual machines (VMs) to a tenant's virtual network. Orchestration engine 130 may connect a tenant's virtual network to an external network, e.g., the Internet or a VPN. Orchestration engine 130 may implement a security policy across a group of VMs or to the boundary of a tenant's network. Orchestration engine 130 may deploy a network service (e.g. a load balancer) in a tenant's virtual network.

In some examples, SDN controller 132 manages the network and networking services such load balancing, security, and may allocate resources from devices 110 that serve as host devices to various applications via southbound API 133. That is, southbound API 133 represents a set of communication protocols utilized by SDN controller 132 to make the actual state of the network equal to the desired state as specified by orchestration engine 130. For example, SDN controller 132 may implement high-level requests from orchestration engine 130 by configuring physical switches, e.g. TOR switches, chassis switches, and switch fabric 121; physical routers; physical service nodes such as firewalls and load balancers; and virtual services such as virtual firewalls in a VM. SDN controller 132 maintains routing, networking, and configuration information within a state database.

Network analysis system 140 interacts with one or more of devices 110 (and/or other devices) to collect flow datagrams from across data center 101 and/or network system 100. Flow datagrams are datagrams that include data representative of flows of network traffic. For instance, agents operating within data center 101 and/or network system 100 may sample flows of packets within data center 101 and/or network system 100 and package sampled packets into flow datagrams. The agents may forward the flow datagrams to network analysis system 140, thereby enabling network analysis system 140 to collect the flow datagrams. Such flow datagrams may include underlay flow data and overlay flow data. In some examples, the underlay flow data may be collected through samples of flow data collected at Layer 2 of the OSI model. Overlay flow data may be data (e.g., samples of data) derived from overlay traffic across one or more virtual networks established within network system 100. Overlay flow data may, for example, include information identifying a source virtual network and a destination virtual network.

In accordance with one or more aspects of the present disclosure, network analysis system 140 of FIG. 1A may configure each of devices 110 to generate flow datagrams. For instance, in an example that can be described with reference to FIG. 1A, network analysis system 140 outputs a signal to each of devices 110. Each of devices 110 receives a signal and interprets the signal as a command to generate flow datagrams, including flow datagrams indicating underlay flow data and/or overlay flow data. Thereafter, each of devices 110 communicates flow datagrams including underlay flow data and/or overlay flow data to network analysis system 140 as data packets are processed by each of devices 110. In the example of FIG. 1A, other network devices, including network devices within switch fabric 121 (and not specifically shown), may also be configured to generate flow datagrams. Network analysis system 140 receives the flow datagrams.

Additionally, network analysis system 140 stores rules data for one or more applications. In this disclosure, an "application" is a label for a particular type of traffic data. In some examples, an application may be a generic service, an internal service, or an external application. A generic service may be recognized based on a computing of ports and a protocol. Examples of generic services may include, in Transmission Control Protocol (TCP), port 80 and Hypertext Transfer Protocol (HTTP), port 443 and Hypertext Transfer Protocol Secure (HTTPS), port 22 and Secure Shell (SSH), and so on. An internal service may be a custom service deployed on a virtual machine (VM) or set of VMs. An internal service may be recognized by a combination of Internet Protocol (IP) addresses, ports, protocols, and virtual networks (VNs). An external application may be a global service name which traffic is related to. An external application may be recognized by a combination of ports, IP addresses, Domain Name Service (DNS) domains, etc.

As noted above, network analysis system 140 may receive a stream of flow datagrams. Network analysis system 140 may use the rule data for an application to identify, within the stream of flow datagrams, flow datagrams that are associated with the application. Additionally, network analysis system 140 may generate application-enriched flow datagrams based on the identified flow datagrams. For instance, network analysis system 140 may modify the identified flow datagrams to specify an application identifier of the application.

Furthermore, network analysis system 140 may process queries that return results based on the application-enriched flow datagrams. For instance, user interface device 129 detects input and outputs information about the input to network analysis system 140. Network analysis system 140 determines that the information corresponds to a request for information about network system 100 from a user of user interface device 129. Network analysis system 140 processes the request by querying stored flow data. Network analysis system 140 generates a response to the query based on the stored flow data, and outputs information about the response to user interface device 129.

By processing certain queries, network analysis system 140 may use the application-enriched flow datagrams to answer queries such as, "which applications generate the most traffic in network system 100?", "how is traffic distributed in network system 100 for a particular application?", "how is application traffic balanced between hosts?", "which applications are running on specific hosts or virtual machines?", and so on. Without enriching the flow datagrams with information identifying applications, it may not be possible to provide answers to such queries.

Although this disclosure primarily discusses applications, discussion in this disclosure of applications may also apply to microservices.

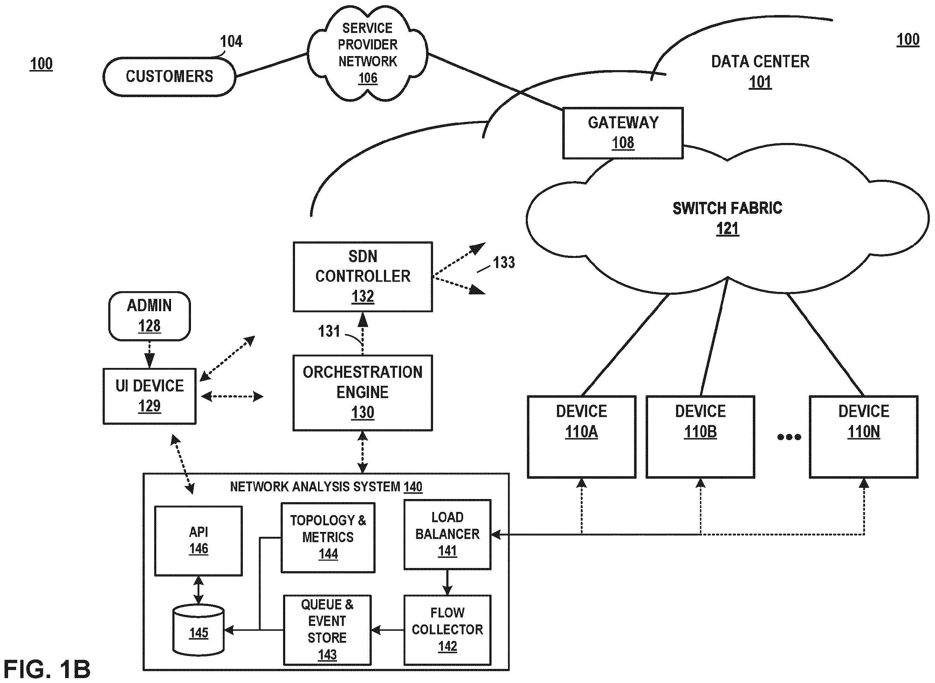

FIG. 1B a conceptual diagram illustrating example components of a system for analyzing traffic flows across a network and/or within data center, in accordance with one or more aspects of the present disclosure. FIG. 1B includes many of the same elements described in connection with FIG. 1A. Elements illustrated in FIG. 1B may correspond to elements illustrated in FIG. 1A that are identified by like-numbered reference numerals in FIG. 1A. In general, such like-numbered elements may be implemented in a manner consistent with the description of the corresponding element provided in connection with FIG. 1A, although in some examples, such elements may involve alternative implementations with more, fewer, and/or different capabilities and attributes.

Unlike FIG. 1A, however, FIG. 1B illustrates components of network analysis system 140. Network analysis system 140 is shown as including load balancer 141, flow collector 142, queue & event store 143, topology & metrics source 144, data store 145 and flow API 146. In general, network analysis system 140 and components of network analysis system 140 are designed and/or configured to ensure high availability and an ability to process a high volume of flow data. In some examples, multiple instances of components of network analysis system 140 may be orchestrated (e.g., by orchestration engine 130) to execute on different physical servers to ensure that there is no single point of failure for any component of network analysis system 140. In some examples, network analysis system 140 or components thereof may be scaled independently and horizontally to enable efficient and/or effective processing of a desired volume of traffic (e.g., flow data).

Network analysis system 140 of FIG. 1B may, as in FIG. 1A, configure each of devices 110 to generate flow datagrams. For instance, network analysis system 140 may output a signal to each of devices 110 to configure each of devices 110 to generate flow datagrams, including flow datagrams indicating underlay flow data and overlay flow data. One or more of devices 110 may thereafter generate flow datagrams and report such flow datagrams to network analysis system 140.

In FIG. 1B, load balancer 141 of network analysis system 140 receives flow datagrams from devices 110. Load balancer 141 may distribute the flow datagrams across multiple flow collectors to ensure an active/active failover strategy for the flow collectors. In some examples, multiple load balancers 141 may be required to ensure high availability and scalability.

Flow collector 142 collects flow datagrams from load balancer 141. For example, flow collector 142 of network analysis system 140 receives and processes flow datagrams from devices 110 (after processing by load balancer 141). Flow collector 142 sends the flow datagrams upstream to queue & event store 143. In some examples, flow collector 142 may address, process, and/or accommodate unified datagrams in sFlow, NetFlow v9, IPFIX, jFlow, Contrail Flow, and other formats. Flow collector 142 may be capable of parsing inner headers (i.e., headers of packets that are at least partially encapsulated) in sFlow datagrams and other flow datagrams. Flow collector 142 may be able to handle message overflows, enriched flow records with topology information (e.g., AppFormix topology information), and other types of messages and datagrams. Flow collector 142 may also be able to convert data to a binary format before writing or sending data to queue & event store 143. Underlay flow data of the "sFlow" type, which refers to a "sampled flow," is a standard for packet export at Layer 2 of the OSI model. It provides a means for exporting truncated packets, together with interface counters for the purpose of network monitoring.

From the inner (underlay) packet, flow collector 142 may parse the source IP, destination IP, source port, destination port, and protocol. Some types of flow datagrams (including sFlow data) include only a fragment of sampled network traffic (e.g., the first 128 bytes), so in some cases, the flow data might not include all of the inner fields. In such an example, such data may be marked as missing.

Queue & event store 143 may receive data from one or more flow collectors 142, store the data, and make the data available for ingestion in data store 145. In some examples, this enables separation of the task of receiving and storing large volumes of data from the task of indexing the data and preparing the data for analytical queries. In some examples, queue & event store 143 may also enable independent users to directly consume the stream of flow records. In some examples, queue & event store 143 may be used to discover anomalies and produce alerts in real time. In some examples, flow data may be parsed by reading encapsulated packets, including VXLAN, MPLS over UDP, and MPLS over GRE.

Topology & metrics source 144 may enrich or augment the datagrams with topology information and/or metrics information. For example, topology & metrics source 144 may provide network topology metadata, which may include identified nodes or network devices, configuration information, configuration, established links, and other information about such nodes and/or network devices. In some examples, topology & metrics source 144 may use AppFormix topology data or may be an executing AppFormix module. The information received from topology & metrics source 144 may be used to enrich flow datagrams collected by flow collector 142 and support flow API 146 in processing queries of data store 145.

Data store 145 may be configured to store data, such as datagrams, received from queue & event store 143 and topology & metrics source 144 in an indexed format, enabling fast aggregation queries and fast random-access data retrieval. In some examples, data store 145 may achieve fault tolerance and high availability by sharding and replicating the data.

Flow API 146 may process query requests sent by one or more user interface devices 129. For instance, in some examples, flow API 146 may receive a query request from user interface device 129 through an HTTP POST request. In such an example, flow API 146 converts information included within the request to a query for f 145. To create the query, flow API 146 may use topology information from topology & metrics source 144. Flow API 146 may use one or more of such queries to perform analytics on behalf of user interface device 129. Such analytics may include traffic deduplication, overlay-underlay correlation, traffic path identification, and/or heatmap traffic calculation. In particular, such analytics may involve correlating the underlay flow data with the overlay flow data, thereby enabling identification of which underlay network devices are relevant to traffic flowing over a virtual network and/or between two virtual machines. Through techniques in accordance with one or more aspects of the present disclosure, network analysis system 140 may be able to associate data flows with applications in a data center, such as a multitenant data center.

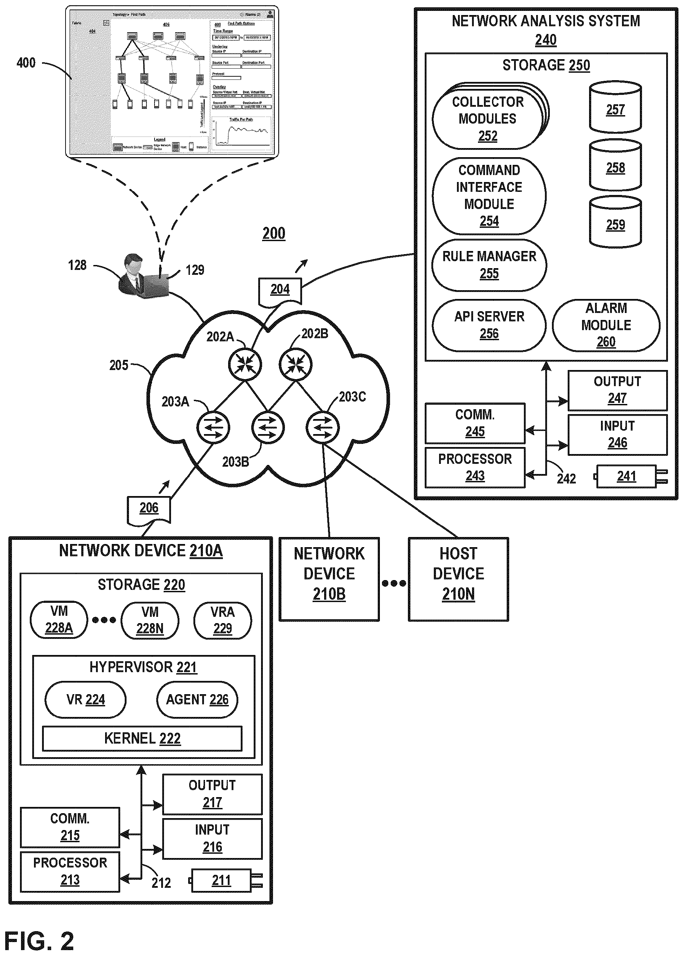

FIG. 2 is a block diagram illustrating an example network for analyzing traffic flows across a network and/or within data center, in accordance with one or more aspects of the present disclosure. Network system 200 of FIG. 2 may be described as an example or alternative implementation of network system 100 of FIG. 1A or FIG. 1B. One or more aspects of FIG. 2 may be described herein within the context of FIG. 1.

Although a data center, such as that illustrated in FIG. 1A, FIG. 1B, and FIG. 2 may be operated by any entity, some data centers are operated by a service provider, where the business model of such a service provider is to provide computing capacity to its clients. For this reason, data centers usually contain a huge number of compute nodes, or host devices. In order to operate efficiently, those hosts have to be connected to each other and to the external world, and that ability is provided through physical network devices, which may be interconnected in a leaf-spine topology. The collection of these physical devices, such as network devices and hosts, form the underlay network.

Host devices in such a data center usually has several virtual machines running on it, which are called workloads. Clients of the data center usually have access to these workloads, and can install applications and perform other operations using such workloads. Workloads that run on different host devices but are accessible by one particular client are organized into a virtual network. Each client usually has at least one virtual network. Those virtual networks are also called overlay networks.

In the example of FIG. 2, network 205 connects network analysis system 240, network device 210A, network device 210B, and network device 210N. Network analysis system 240 may correspond to an example or alternative implementation of network analysis system 140 illustrated in FIG. 1A and FIG. 1B. Network devices 210A, 210B, through 210N may be collectively referenced as "network devices 210," representing any number of network devices 210.

Each of network devices 210 may be an example of devices 110 of FIG. 1A and FIG. 1B. In some examples, one or more of network devices 210 executes multiple virtual computing instances, such as virtual machines 228.

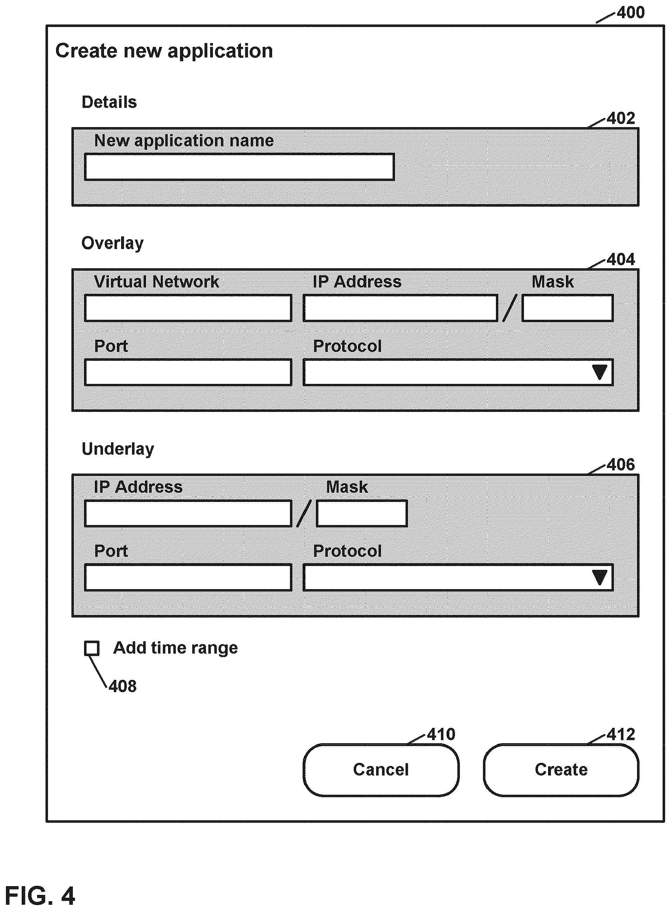

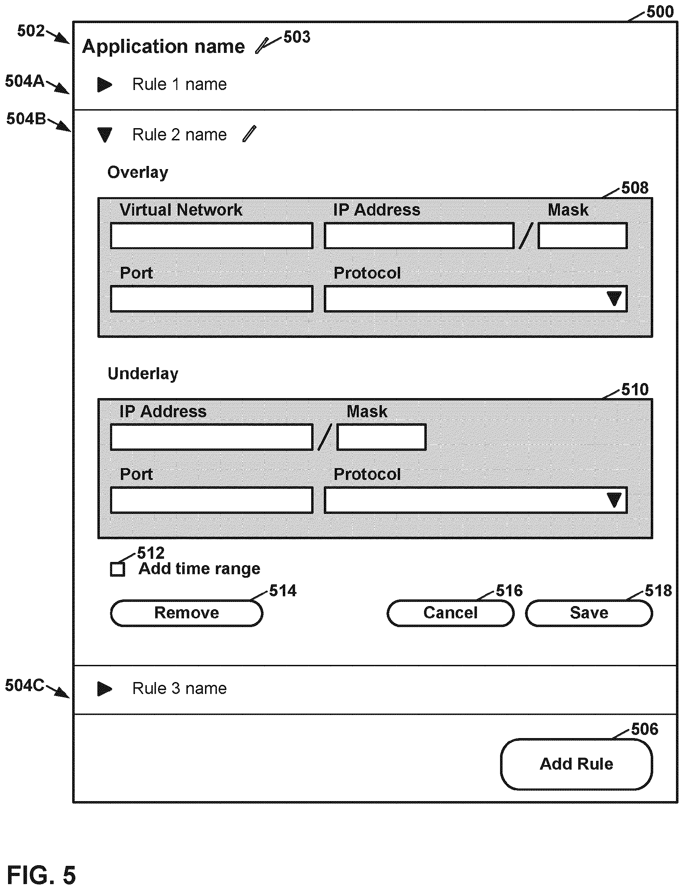

Also connected to network 205 is user interface device 129, which may be operated by administrator 128, as in FIG. 1A and FIG. 1B. In some examples, user interface device 129 may present, at a display device associated with user interface device 129, one or more user interfaces, some of which may have a form similar to user interface 400. In some examples, user interface device 129 may present user interfaces for configuring applications, establishing rules, reviewing query results, and so on. FIG. 4 and FIG. 5, which are described in greater detail elsewhere in this disclosure, are examples of user interfaces that may be presented by user interface device 129.

FIG. 2 also illustrates underlay flow datagrams 204 and overlay flow datagrams 206 flowing within network system 200. In particular, underlay flow datagrams 204 are shown leaving spine device 202A and flowing to network analysis system 240. Similarly, overlay flow datagrams 206 is shown leaving network device 210A and flowing across 205. In some examples, overlay flow datagrams 206 are communicated through network 205 and to network analysis system 240 as described herein. For simplicity, FIG. 2 illustrates a single underlay flow datagram and a single overlay flow datagram. However, it should be understood that each of spine devices 202 and leaf devices 203 may generate and communicate underlay flow datagrams 204 to network analysis system 240, and in some examples, each of network devices 210 (and/or other devices) may generate underlay flow datagrams 204 and communicate such data across network 205 to network analysis system 240. Further, it should be understood that each of network devices 210 (and/or other devices) may generate overlay flow datagrams 206 and communicate such data over network 205 to network analysis system 240.

Network 205 may correspond to any of switch fabric 121 and/or service provider network 106 of FIG. 1A and FIG. 1B, or alternatively, may correspond to a combination of switch fabric 121, service provider network 106, and/or another network. Network 205 may also include some of the components of FIG. 1A and FIG. 1B, including gateway 108, SDN controller 132, and orchestration engine 130.

Illustrated within network 205 are spine devices 202A and 202B (collectively "spine devices 202" and representing any number of spine devices 202), as well as leaf device 203A, 203B, and leaf device 203C (collectively "leaf devices 203" and also representing any number of leaf devices 203). Although network 205 is illustrated with spine devices 202 and leaf devices 203, other types of network devices may be included in network 205, including core switches, edge network devices, top-of-rack devices, and other network devices.

In general, network 205 may be the internet, or may include or represent any public or private communications network or other network. For instance, network 205 may be a cellular, Wi-Fi^{®}, ZigBee, Bluetooth, Near-Field Communication (NFC), satellite, enterprise, service provider, and/or other type of network enabling transfer of transmitting data between computing systems, servers, and computing devices. One or more of client devices, server devices, or other devices may transmit and receive data, commands, control signals, and/or other information across network 205 using any suitable communication techniques. Network 205 may include one or more network hubs, network switches, network routers, satellite dishes, or any other network equipment. Such devices or components may be operatively inter-coupled, thereby providing for the exchange of information between computers, devices, or other components (e.g., between one or more client devices or systems and one or more server devices or systems). Each of the devices or systems illustrated in FIG. 2 may be operatively coupled to network 205 using one or more network links. The links coupling such devices or systems to network 205 may be Ethernet, Asynchronous Transfer Mode (ATM) or other types of network connections, and such connections may be wireless and/or wired connections. One or more of the devices or systems illustrated in FIG. 2 or otherwise on network 205 may be in a remote location relative to one or more other illustrated devices or systems.

Network analysis system 240 may be implemented as any suitable computing system, such as one or more server computers, workstations, mainframes, appliances, cloud computing systems, and/or other computing systems that may be capable of performing operations and/or functions described in accordance with one or more aspects of the present disclosure. In some examples, network analysis system 240 represents a cloud computing system, server farm, and/or server cluster (or portion thereof) that provides services to client devices and other devices or systems. In other examples, network analysis system 240 may represent or be implemented through one or more virtualized compute instances (e.g., virtual machines, containers) of a data center, cloud computing system, server farm, and/or server cluster.

In the example of FIG. 2, network analysis system 240 may include power source 241, one or more processors 243, one or more communication units 245, one or more input devices 246, and one or more output devices 247. Storage devices 250 may include one or more collector modules 252, a command interface module 254, a rule manager 255, an API server 256, a rules database 257, a cache 258, a flow database 259, and an alarm module 260.

One or more of the devices, modules, storage areas, or other components of network analysis system 240 may be interconnected to enable inter-component communications (physically, communicatively, and/or operatively). In some examples, such connectivity may be provided by through communication channels (e.g., communication channels 242), a system bus, a network connection, an inter-process communication data structure, or any other method for communicating data.

Power source 241 may provide power to one or more components of network analysis system 240. Power source 241 may receive power from the primary alternating current (AC) power supply in a data center, building, home, or other location. In other examples, power source 241 may be a battery or a device that supplies direct current (DC). In still further examples, network analysis system 240 and/or power source 241 may receive power from another source. One or more of the devices or components illustrated within network analysis system 240 may be connected to power source 241, and/or may receive power from power source 241. Power source 241 may have intelligent power management or consumption capabilities, and such features may be controlled, accessed, or adjusted by one or more modules of network analysis system 240 and/or by one or more processors 243 to intelligently consume, allocate, supply, or otherwise manage power.

One or more processors 243 of network analysis system 240 may implement functionality and/or execute instructions associated with network analysis system 240 or associated with one or more modules illustrated herein and/or described herein. One or more processors 243 may be, may be part of, and/or may include processing circuitry that performs operations in accordance with one or more aspects of the present disclosure. Examples of processors 243 include microprocessors, application processors, display controllers, auxiliary processors, one or more sensor hubs, and any other hardware configured to function as a processor, a processing unit, or a processing device. Central monitoring system 210 may use one or more processors 243 to perform operations in accordance with one or more aspects of the present disclosure using software, hardware, firmware, or a mixture of hardware, software, and firmware residing in and/or executing at network analysis system 240.

One or more communication units 245 of network analysis system 240 may communicate with devices external to network analysis system 240 by transmitting and/or receiving data, and may operate, in some respects, as both an input device and an output device. In some examples, communication unit 245 may communicate with other devices over a network. In other examples, communication units 245 may send and/or receive radio signals on a radio network such as a cellular radio network. Examples of communication units 245 include a network interface card (e.g. such as an Ethernet card), an optical transceiver, a radio frequency transceiver, a GPS receiver, or any other type of device that can send and/or receive information. Other examples of communication units 245 may include devices capable of communicating over Bluetooth^{®}, GPS, NFC, ZigBee, and cellular networks (e.g., 3G, 4G, 5G), and Wi-Fi^{®} radios found in mobile devices as well as Universal Serial Bus (USB) controllers and the like. Such communications may adhere to, implement, or abide by appropriate protocols, including Transmission Control Protocol/Internet Protocol (TCP/IP), Ethernet, Bluetooth, NFC, or other technologies or protocols.

One or more input devices 246 may represent any input devices of network analysis system 240 not otherwise separately described herein. One or more input devices 246 may generate, receive, and/or process input from any type of device capable of detecting input from a human or machine. For example, one or more input devices 246 may generate, receive, and/or process input in the form of electrical, physical, audio, image, and/or visual input (e.g., peripheral device, keyboard, microphone, camera).

One or more output devices 247 may represent any output devices of network analysis system 240 not otherwise separately described herein. One or more output devices 247 may generate, receive, and/or process input from any type of device capable of detecting input from a human or machine. For example, one or more output devices 247 may generate, receive, and/or process output in the form of electrical and/or physical output (e.g., peripheral device, actuator).

One or more storage devices 250 within network analysis system 240 may store information for processing during operation of network analysis system 240. Storage devices 250 may store program instructions and/or data associated with one or more of the modules described in accordance with one or more aspects of this disclosure. One or more processors 243 and one or more storage devices 250 may provide an operating environment or platform for such modules, which may be implemented as software, but may in some examples include any combination of hardware, firmware, and software. One or more processors 243 may execute instructions and one or more storage devices 250 may store instructions and/or data of one or more modules. The combination of processors 243 and storage devices 250 may retrieve, store, and/or execute the instructions and/or data of one or more applications, modules, or software. Processors 243 and/or storage devices 250 may also be operably coupled to one or more other software and/or hardware components, including, but not limited to, one or more of the components of network analysis system 240 and/or one or more devices or systems illustrated as being connected to network analysis system 240.

In some examples, one or more storage devices 250 are implemented through temporary memory, which may mean that a primary purpose of the one or more storage devices is not long-term storage. Storage devices 250 of network analysis system 240 may be configured for short-term storage of information as volatile memory and therefore not retain stored contents if deactivated. Examples of volatile memories include random access memories (RAM), dynamic random access memories (DRAM), static random access memories (SRAM), and other forms of volatile memories known in the art. Storage devices 250, in some examples, also include one or more computer-readable storage media. Storage devices 250 may be configured to store larger amounts of information than volatile memory. Storage devices 250 may further be configured for long-term storage of information as non-volatile memory space and retain information after activate/off cycles. Examples of non-volatile memories include magnetic hard disks, optical discs, Flash memories, or forms of electrically programmable memories (EPROM) or electrically erasable and programmable (EEPROM) memories.

Collector modules 252 may perform functions relating to receiving both underlay flow datagrams 204 and overlay flow datagrams 206 and performing load balancing as necessary to ensure high availability, throughput, and scalability for collecting such flow data. Collector modules 252 may process the data and prepare the data for storage within flow database 259. In some examples, collector modules 252 may store the flow data within flow database 259.

Command interface module 254 may perform functions relating to generating user interfaces for presenting the results of analytical queries performed by API server 256. In some examples, command interface module 254 may generate information sufficient to generate a set of user interfaces, and cause communication unit 215 to output such information over network 205 for use by user interface device 129 to present one or more user interfaces at a display device associated with user interface device 129.

API server 256 may perform analytical queries involving data stored in flow database 259 that is derived from collection of underlay flow datagrams 204 and overlay flow datagrams 206. In some examples, API server 256 may receive a request in the form of information derived from an HTTP POST request, and in response, may convert the request into a query to be executed on flow database 259. Further, in some examples, API server 256 may fetch topology information pertaining to device 110, and perform analytics that include data deduplication, overlay-underlay correlation, traffic path identification, and heatmap traffic calculation.

Flow database 259 may represent any suitable data structure or storage medium for storing information related to data flow information, including storage of flow datagrams derived from underlay flow datagrams 204 and overlay flow datagrams 206. In accordance with the techniques of this disclosure, flow database 259 may store application-enriched flow datagrams or other data enriched with application identifiers. Flow database 259 may store data in an indexed format, which may enable fast data retrieval and execution of queries. The information stored in flow database 259 may be searchable and/or categorized such that one or more modules within network analysis system 240 may provide an input requesting information from flow database 259, and in response to the input, receive information stored within flow database 259. Flow database 259 may be primarily maintained by collector modules 252. Flow database 259 may be implemented through multiple hardware devices and may achieve fault tolerance and high availability by sharding and replicating data. In some examples, flow database 259 may be implemented using the open source ClickHouse column-oriented database management system.

Each of network devices 210 represents a physical computing device or compute node that provides an execution environment for virtual hosts, virtual machines, containers, and/or other virtualized computing resources. In some examples, each of network devices 210 may be a component of a cloud computing system, server farm, and/or server cluster (or portion thereof) that provides services to client devices and other devices or systems.

Certain aspects of network devices 210 are described herein with respect to network device 210A. Other network devices 210 (e.g., network device 210B through 210N) may be described similarly, and may also include the same, similar, or corresponding components, devices, modules, functionality, and/or other features. Descriptions herein with respect to network device 210A may therefore correspondingly apply to one or more other network devices 210 (e.g., network device 210B through network device 210N).

In the example of FIG. 2, network device 210A includes underlying physical compute hardware that includes power source 211, one or more processors 213, one or more communication units 215, one or more input devices 216, one or more output devices 217, and one or more storage devices 220. Storage devices 220 may include hypervisor 221, including kernel module 222, virtual router module 224, and agent module 226. Virtual machines 228A through 228N (collectively "virtual machines 228" and representing any number of virtual machines 228) execute on top of hypervisor 221 or are controlled by hypervisor 221. Similarly, virtual router agent (VRA) 229 may execute on, or under the control of, hypervisor 221. One or more of the devices, modules, storage areas, or other components of network device 210A may be interconnected to enable inter-component communications (physically, communicatively, and/or operatively). In some examples, such connectivity may be provided by through communication channels (e.g., communication channels 212), a system bus, a network connection, an inter-process communication data structure, or any other method for communicating data.

Power source 211 may provide power to one or more components of network device 210A. Processor 213 may implement functionality and/or execute instructions associated with network device 210A. Communication unit 215 may communicate with other devices or systems on behalf of network device 210A. One or more input devices 216 and output devices 217 may represent any other input and/or output devices associated with network device 210A. Storage devices 220 may store information for processing during operation of network device 210A. Each of such components may be implemented in a manner similar to those described herein in connection with network analysis system 240 or otherwise.

Hypervisor 221 may serve as a module or system that instantiates, creates, and/or executes one or more virtual machines 228 on an underlying host hardware device. In some contexts, hypervisor 221 may be referred to as a virtual machine manager (VMM). Hypervisor 221 may execute within the execution environment provided by storage devices 220 and processors 213 or on top of an operating system kernel (e.g., kernel module 222). In some examples, hypervisor 221 is an operating system-level component that executes on a hardware platform (e.g., host 210) to provide a virtualized operating environment and orchestration controller for virtual machines 228, and/or other types of virtual computing instances. In other examples, hypervisor 221 may be a software and/or firmware layer that provides a lightweight kernel and operates to provide a virtualized operating environment and orchestration controller for virtual machines 228, and/or other types of virtual computing instances. Hypervisor 221 may incorporate the functionality of kernel module 222 (e.g., as a "type 1 hypervisor"), as shown in FIG. 2. In other examples, hypervisor 221 may execute on a kernel (e.g., as a "type 2 hypervisor").

Virtual router module 224 may execute multiple routing instances for corresponding virtual networks within data center 101 and may route packets to appropriate virtual machines executing within the operating environment provided by devices 110. Virtual router module 224 may also be responsible for collecting overlay flow data, such as Contrail Flow data when used in an infrastructure in which the Contrail SDN is employed. Accordingly, each of network devices 210 may include a virtual router. Packets received by virtual router module 224 of network device 210A, for instance, from the underlying physical network fabric may include an outer header to allow the physical network fabric to tunnel the payload or "inner packet" to a physical network address for a network interface of network device 210A. The outer header may include not only the physical network address of the network interface of the server but also a virtual network identifier such as a VxLAN tag or Multiprotocol Label Switching (MPLS) label that identifies one of the virtual networks as well as the corresponding routing instance executed by the virtual router. An inner packet includes an inner header having a destination network address that conform to the virtual network addressing space for the virtual network identified by the virtual network identifier.

Agent module 226 may execute as part of hypervisor 221 or may execute within kernel space or as part of kernel module 222. Agent module 226 may monitor some or all of the performance metrics associated with network device 210A, and may implement and/or enforcing policies, which may be received from a policy controller (not shown in FIG. 2). Agent module 226 may configure virtual router module 224 to communicate flow datagrams, which may include overlay flow data to network analysis system 240.

Virtual machine 228A through virtual machine 228N (collectively "virtual machines 228," representing any number of virtual machines 228) may represent example instances of virtual machines 228. Network device 210A may partition the virtual and/or physical address space provided by storage device 220 into user space for running user processes. Network device 210A may also partition virtual and/or physical address space provided by storage device 220 into kernel space, which is protected and may be inaccessible by user processes.

In general, each of virtual machines 228 may be any type of software application and each may be assigned a virtual address for use within a corresponding virtual network, where each of the virtual networks may be a different virtual subnet provided by virtual router module 224. Each of virtual machines 228 may be assigned its own virtual layer three (L3) IP address, for example, for sending and receiving communications but is unaware of an IP address of the physical server on which the virtual machine is executing. In this way, a "virtual address" is an address for an application that differs from the logical address for the underlying, physical computer system, e.g., network device 210A in the example of FIG. 2.

Each of virtual machines 228 may represent a tenant virtual machine running customer applications such as Web servers, database servers, enterprise applications, or hosting virtualized services used to create service chains. In some cases, any one or more of network devices 210 or another computing device hosts customer applications directly, i.e., not as virtual machines. Although one or more aspects of the present disclosure are described in terms of virtual machines or virtual hosts, techniques in accordance with one or more aspects of the present disclosure that are described herein with respect to such virtual machines or virtual hosts may also apply to containers, applications, processes, or other units of execution (virtualized or non-virtualized) executing on network devices 210.

Virtual router agent 229 is included within network device 210A in the example of FIG. 2 and may communicate with SDN controller 132 and virtual router module 224 so as to control the overlay of virtual networks and coordinate the routing of data packets within network device 210A. In general, virtual router agent 229 communicates with SDN controller 132, which generates commands to control routing of packets through data center 101. Virtual router agent 229 may execute in user space and operate as a proxy for control plane messages between virtual machines 228 and SDN controller 132. For example, virtual machine 228A may request to send a message using its virtual address via virtual router agent 229, and virtual router agent 229 may in turn send the message and request that a response to the message be received for the virtual address of virtual machine 228A, which originated the first message. In some cases, virtual machine 228A may invoke a procedure or function call presented by an application programming interface of virtual router agent 229, and in such an example, virtual router agent 229 handles encapsulation of the message as well, including addressing.

Network analysis system 240 may configure each of spine devices 202 and leaf devices 203 to generate underlay flow datagrams 204. For instance, in an example that can be described with reference to FIG. 2, collector modules 252 of network analysis system 240 causes communication unit 215 to output one or more signals over network 205. Each of spine devices 202 and leaf devices 203 detect a signal and interpret the signal as a command to enable generation of underlay flow datagrams 204. For example, upon detecting a signal from network analysis system 240, spine device 202A may configure itself to collect sFlow data and communicate the sFlow datagrams (as underlay flow datagrams 204) over network 205 to network analysis system 240. As another example, upon detecting a signal from network analysis system 240, leaf device 203A detects a signal and configures itself to generate sFlow datagrams and communicate the sFlow datagrams over network 205 to network analysis system 240. Further, in some examples, each of network devices 210 may detect a signal from network analysis system 240 and interpret the signal as a command to enable generation of sFlow datagrams. Accordingly, in some examples, sFlow datagrams may be generated by collector modules (agents) executing on network devices 210.

Accordingly, in the example being described, spine devices 202, leaf devices 203 (and possibly one or more of network devices 210) generate sFlow datagrams. In other examples, however, one or more of such devices may generate other types of underlay flow datagrams 204, such as IPFIX and/or NetFlow data. Collecting any such underlay flow datagrams may involve collection of a five-tuple of data that includes the source and destination IP address, the source and destination port number, and the network protocol being used.

Network analysis system 240 may configure each of network devices 210 to generate overlay flow datagrams 206. For instance, continuing with the example being described with reference to FIG. 2, collector modules 252 causes communication unit 215 to output one or more signals over network 205. Each of network devices 210 detect a signal that is interpreted as a command to generate overlay flow datagrams 206 and communicate overlay flow datagrams 206 to network analysis system 240. For example, with reference to network device 210A, communication unit 215 of network device 210A detects a signal over network 205 and outputs information about the signal to hypervisor 221. Hypervisor 221 outputs information to agent module 226. Agent module 226 interprets the information from hypervisor 221 as a command to generate overlay flow datagrams 206. Agent module 226 configures virtual router module 224 to generate overlay flow datagrams 206 and communicate overlay flow datagrams 206 to network analysis system 240.

Overlay flow datagrams 206 includes, in at least some examples, the five-tuple of information about the source and destination addresses, ports, and protocol. In addition, overlay flow datagrams 206 may include information about the virtual networks associated with the flow, including the source virtual network and the destination virtual network. In some examples, particularly for a network configured using the Contrail SDN available from Juniper Networks of Sunnyvale, California, overlay flow datagrams 206 may correspond to Contrail Flow data.

In the example being described, agent module 226 configures virtual router module 224 to generate overlay flow datagrams 206. In other examples, however, hypervisor 221 may configure virtual router module 224 to generate overlay flow datagrams 206. Further, in other examples, overlay flow datagrams 206 data may be generated by another module (alternatively or in addition), such as agent module 226 or even by hypervisor 221 or kernel module 222. Accordingly, in some examples, network devices 210 may generate both underlay flow datagrams (sFlow datagrams) and overlay flow datagrams (e.g., Contrail Flow datagrams).

Network analysis system 240 may receive both underlay flow datagrams 204 and overlay flow datagrams 206. For instance, continuing with the example and with reference to FIG. 2, spine device 202A samples, detects, senses, and/or generates underlay flow datagrams 204. Spine device 202A outputs a signal over network 205. Communication unit 215 of network analysis system 240 detects a signal from spine device 202A and outputs information about the signal to collector modules 252. Collector modules 252 determine that the signal includes information about underlay flow datagrams 204.

Similarly, virtual router module 224 of network device 210A samples, detects, senses, and/or generates overlay flow datagrams 206 at network device 210A. Virtual router module 224 causes communication unit 215 of network device 210A to output a signal over network 205. Communication unit 215 of network analysis system 240 detects a signal from network device 210A and outputs information about the signal to collector modules 252. Collector modules 252 determines that the signal includes information about overlay flow datagrams 206.

Network analysis system 240 may process both underlay flow datagrams 204 and overlay flow datagrams 206 received from various devices within network system 100. For instance, still continuing with the same example, collector modules 252 processes the flow datagrams received from spine device 202A, network device 210A, and other devices by distributing the signals across multiple collector modules 252. In some examples, each of collector modules 252 may execute on a different physical server, and may be scaled independently and horizontally to handle the desired volume or peak capacity of flow traffic from spine devices 202, leaf devices 203, and network devices 210. Each of collector modules 252 stores each instance of underlay flow datagrams 204 and overlay flow datagrams 206 and makes the stored flow datagrams available for ingestion in flow database 259. Collector modules 252 indexes the flow datagrams and prepares the flow datagrams for use with analytical queries.

Rule manager 255 obtains a set of rules. For example, command interface module 254 may receive an indication of user input of the set of rules. In this example, command interface module 254 may provide the set of rules to rule manager 255. Rule manager 255 may store the rules in rules database 257 for persistent storage. In some examples, rules database 257 is implemented as a PostgreSQL database. In other examples, rules database 257 is implemented using other types of databases. Each of the rules specifies how to associate a flow with an application. Rule manager 255 uses rules stored in rules database 257 to configure collector modules 252 to associate flows with applications, or more specifically, associate flows with application identifiers. An application identifier includes data that identify an application.

Cache 258 may store VN information. Cache 258 may be implemented as a Redis cache. Collector modules 252 may derive VN information for flow datagrams and may store the derived VN information in cache 258. Collector modules 252 may use the information stored in cache 258 to avoid querying flow database 259 to determine the VN information.

For example, sFlow datagrams do not specify source VN information or destination VN information. Rather, sFlow datagrams include a single VN field. On the other hand, overlay flow datagrams do include fields to specify a source VN and a destination VN. Nevertheless, it may be valuable to associate underlay network datagrams with source and destination VNs. Each overlay flow datagram and underlay flow datagram includes a 5-tuple that specifies a source IP address, a destination IP address, a source port, a destination port, and a protocol. Different combinations of values in the 5-tuple correspond to different flows. Cache 258 stores a key-value mapping. Each key of a key-value pair specifies an instance of the 5-tuple received by collector modules 252 in either an overlay flow datagram. Each value of a key-value pair specifies a source VN and a destination VN specified in the overlay flow datagram. When any of collector modules 252 receives an underlay flow datagram, such as an sFlow datagram, the collector module determines whether the 5-tuple of the underlay flow datagram is specified as a key in a key-value pair stored in cache 258. If so, the collector module may enrich the underlay flow datagram to specify the source VN and destination VN indicated by the value of the key-value pair. In this way, enriched underlay source datagrams may be stored into flow database 259. Use of cache 258 in this manner to enrich underlay flow datagrams may avoid the need to perform a query on flow database 259 to determine source and destination VNs associated with underlay flow datagrams.

Network analysis system 240 may store underlay flow datagrams 204 and overlay flow datagrams 206 in flow database 259. For example, in FIG. 2, collector modules 252 outputs information to flow database 259. Flow database 259 determines that the information corresponds to underlay flow datagrams 204 and overlay flow datagrams 206. Flow database 259 stores the data in indexed format, enabling fast aggregation queries and fast random-access data retrieval. In some examples, flow database 259 may achieve fault tolerance and high availability by sharding and replicating the data across multiple storage devices, which may be located across multiple physical hosts.

In accordance with one or more techniques of this disclosure, collector modules 252 may use rule data for an application to identify flow datagrams that are associated with the application. Collector modules 252 may generate flow datagrams regarding the flow associated with the application (i.e., application-enriched flow datagrams) and may store the application-enriched flow datagrams in flow database 259. Flow collector 142 (FIG. 1A) may operate in the same way as collector modules 252.

Command interface module 254 of network analysis system 240 may receive a query. For instance, still continuing with the same example and with reference to FIG. 2, user interface device 129 detects input and outputs, over network 205, a signal derived from the input. Communication unit 215 of network analysis system 240 detects a signal and provides information to command interface module 254, which in turn provide a query based on the provided information to API server 256. The query may be a request for information about network system 200 for a given time window. API server 256 processes the query on data in flow database 259. For example, a user of user interface device 129 (e.g., administrator 128) may want to determine which of network devices 210 are involved in a flow associated with a particular application. API 146 (FIG. 1A) may operate in the same way as API server 256.

Network analysis system 240 may cause a user interface based on results of the query to be presented at user interface device 129. For example, API server 256 may output information about the query results to command interface module 254. In this example, command interface module 254 uses the information from API server 256 to generate data sufficient to create the user interface. Furthermore, in this example, command interface module 254 causes communication unit 215 to output a signal over network 205. In this example, user interface device 129 detects the signal and generates a user interface (e.g., user interface 400) based on the signal. User interface device 129 presents the user interface at a display associated with user interface device 129.

Modules illustrated in FIG. 2 (e.g., virtual router module 224, agent module 226, collector modules 252, command interface module 254, rule manager 255, API server 256) and/or illustrated or described elsewhere in this disclosure may perform operations described using software, hardware, firmware, or a mixture of hardware, software, and firmware residing in and/or executing at one or more computing devices. For example, a computing device may execute one or more of such modules with multiple processors or multiple devices. A computing device may execute one or more of such modules as a virtual machine executing on underlying hardware. One or more of such modules may execute as one or more services of an operating system or computing platform. One or more of such modules may execute as one or more executable programs at an application layer of a computing platform. In other examples, functionality provided by a module could be implemented by a dedicated hardware device.

Although certain modules, data stores, components, programs, executables, data items, functional units, and/or other items included within one or more storage devices may be illustrated separately, one or more of such items could be combined and operate as a single module, component, program, executable, data item, or functional unit. For example, one or more modules or data stores may be combined or partially combined so that they operate or provide functionality as a single module. Further, one or more modules may interact with and/or operate in conjunction with one another so that, for example, one module acts as a service or an extension of another module. Also, each module, data store, component, program, executable, data item, functional unit, or other item illustrated within a storage device may include multiple components, sub-components, modules, sub-modules, data stores, and/or other components or modules or data stores not illustrated.

Further, each module, data store, component, program, executable, data item, functional unit, or other item illustrated within a storage device may be implemented in various ways. For example, each module, data store, component, program, executable, data item, functional unit, or other item illustrated within a storage device may be implemented as a downloadable or preinstalled application or "app." In other examples, each module, data store, component, program, executable, data item, functional unit, or other item illustrated within a storage device may be implemented as part of an operating system executed on a computing device.

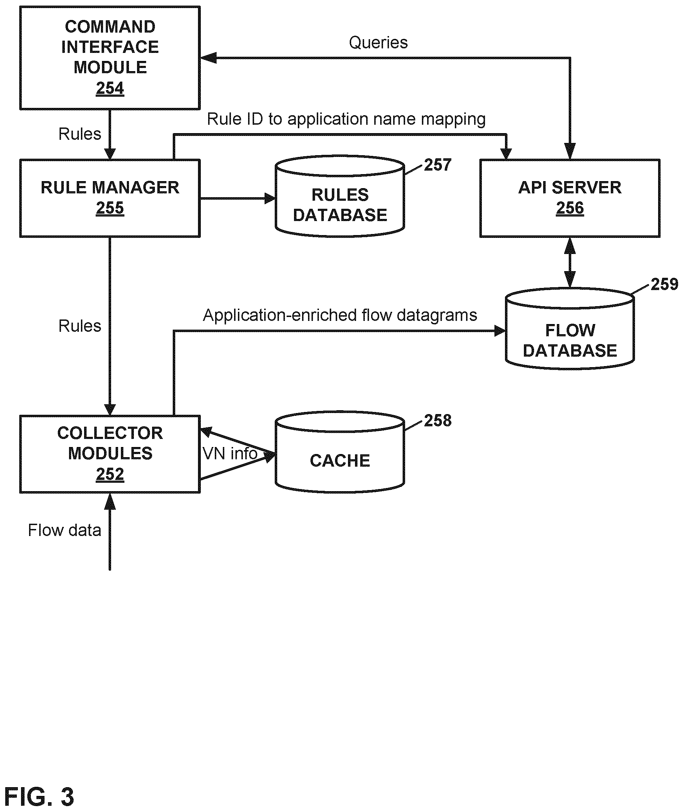

FIG. 3 is a block diagram illustrating an example interaction of components of network analysis system 240 to monitor application flows in accordance with one or more aspects of the present disclosure. In the example of FIG. 3, network analysis system 240 includes collector modules 252, command interface module 254, rule manager 255, API server 256, rules database 257, cache 258, and flow database 259. In other examples, network analysis system 240 may include more, fewer, or different additional components. For instance, in other examples, network analysis system 240 may include alarm module 260 (FIG. 2) or other components.

In the example of FIG. 3, command interface module 254 may receive rule data for one or more applications. In some examples, command interface module 254 may receive indications of user input specifying the rule data for the one or more applications. Thus, in some examples, a user may use command interface module 254 to define and manage rules for applications from command interface module 254. In examples where command interface module 254 received indications of user input specifying the rule data, command interface module 254 may be considered to be a command user interface (UI) module. FIG. 4 and FIG. 5, which are described in greater detail below, are examples of user interfaces that a user may use to configure rules. In other examples, command interface module 254 may receive rule data from another computing system. Command interface module 254 provides the rule data to rule manager 255.

Rule manager 255 manages the configured rules for applications. As shown in the example of FIG. 3, rule manager 255 receives rule data from command interface module 254. Additionally, rule manager 255 stores the rule data in rules database 257. In some examples, rule manager 255 associates each application with one or more of a unique application identifier (ID), application name, or duration. Example application names may include SSH, HTTPS, KAFKA ^{®} from Apache Software Foundation, etc. The duration of an application is a time range for which the application is valid. In some examples, the ending date and/or ending time of the duration of the application may be undefined.

Rule manager 255 may manage multiple rules for an application. Each rule for an application may serve as a detection filter to associate flow datagrams with an application. A rule for an application may specify values for a set of fields. Data contained within flow datagrams associated with the application have the specified values for the set of fields. The set of fields may include one or more of:
- a source port,
- a destination port,
- a source IP address,
- a destination IP address,
- a protocol,
- an overlay source port,
- an overlay destination port,
- an overlay source IP address,
- an overlay destination IP address,
- an overlay protocol,
- an overlay source VN, or
- an overlay destination VN

Collector modules 252 may use the rules for an application to generate application-enriched flow datagrams. The application-enriched flow datagrams may include an application identifier for the application. For example, if one of collector modules 252 receives a flow datagram that contains a source port field indicating a value specified by a rule for an application, destination port field indicating a value specified by the rule for the application, a source IP address indicating a value specified by the rule for the application, a destination IP address indicating a value specified by the rule for the application, the collector module may determine that the flow datagram is associated with the application. The flow datagram may be an underlay flow datagram or an overlay flow datagram. In some examples, overlay flow datagrams may be referred to as Contrail flow datagrams.

As noted above, the set of fields may include an overlay source VN and/or an overlay destination VN. The overlay source VN and overlay destination VN might not be explicitly specified in individual packets received by collector modules 252. Accordingly, collector modules 252 may use data stored in cache 258 to determine the overlay source VN and/or overlay destination VN for a packet based on other information in the packet.

Furthermore, as shown in the example of FIG. 3, collector modules 252 may store application-enriched flow datagrams in flow database 259. In some examples, instead of directly storing the streams of application-enriched flow datagrams in flow database 259, collector modules 252 may generate data based on the application-enriched flow datagrams and store the resulting data in flow database 259.

API server 256 may receive a rule identifier-to-application name mapping from rule manager 255. The rule identifier-to-application name mapping includes data that map application identifiers used in rules (i.e., rule identifiers) to human-readable application names.

Additionally, API server 256 may receive queries from command interface module 254. API server 256 may generate results in response to a query that are based on the application-enriched flow datagrams. In some examples, the application-enriched flow datagrams include application identifiers (e.g., rule identifiers) and not human-readable application names. Accordingly, API server 256 may use the rule identifier-to-application name mapping to convert rule identifiers in query results to human-readable application names.

FIG. 4 is a conceptual diagram illustrating an example interface 400 for configuring a new application in accordance with one or more aspects of the present disclosure. FIG. 5 is a conceptual diagram illustrating an example interface 500 for adding rules to an application in accordance with one or more aspects of the present disclosure. In the examples of FIG. 4 and FIG. 5, a user may first use interface 400 to configure a new application and may then use interface 500 to set up and manage rules for the application.

As shown in the example of FIG. 4, interface 400 includes an application name element 402, an overlay network element 404, an underlay network element 406, a time range element 408, a cancel button 410, and a create button 412. The application name element 402 allows input of an application name for an application. The application name for the application may be used in a rule identifier-to-application name mapping. Overlay network element 404 includes input features for specifying characteristics of flows associated with the application in an overlay network. Underlay network element 406 includes input features for specifying characteristics of flows associated with the application in an underlay network. Selection of time range element 408 may cause interface 400 to display input features for receiving data indicating a time duration for the application. Command interface module 254 may cancel creation of an application in response to receiving an indication of user input to select cancel button 410. Command interface module 254 may create data for an application based on data received in application name element 402, overlay network element 404, underlay network element 406 and time range element 408 in response to receiving an indication of user input to select create button 412. In other examples, interface 400 may include elements for specifying more, fewer, or different aspects of the application.

As shown in the example of FIG. 5, interface 500 includes an application name element 502, rules elements 504A-504C (collectively, "rules elements 504"), and an add rule button 506. In the example of FIG. 5, interface 500 includes three rules elements 504. However, in other examples, interface 500 may include more or fewer rules elements. Moreover, command interface module 254 may add or delete rules elements in response to indications of user input. Each of rule elements 504 corresponds to a rule associated with the application named in application name element 502.

Application name element 502 specifies a name of an application. In response to receiving an indication of user input to select the pencil icon 503 of application name element 502, command interface module 254 may receive input to edit the name of the application.

In the example of FIG. 5, rule element 504A and rule element 504C are in collapsed states and rule element 504B is in an expanded state. In some examples, multiple rule elements may be in the expanded state concurrently. In the example of FIG. 5, when a rule element (e.g., rule element 504B) is in the expanded state, the rule element includes an overlay network element 508, an underlay network element 510, a time range element 512, a remove button 514, a cancel button 516, and a save button 518.

Overlay network element 508, underlay network element 510, and time range element 512 operate in a similar manner as overlay network element 404, underlay network element 406, and time range element 408 of FIG. 4. In response to receiving an indication of user input to select save button 518, command interface module 254 may update rule data associated with rule element 504 based on changes to data in overlay network element 508, underlay network element 510, and time range element 512. Command interface module 254 may remove the rule associated with rule element 504B in response to receiving an indication of user input to select remove button 514. Command interface module 254 may revert values in overlay network element 508, underlay network element 510 and time range element 512 to unedited values in response to receiving an indication of user input to select cancel button 516.

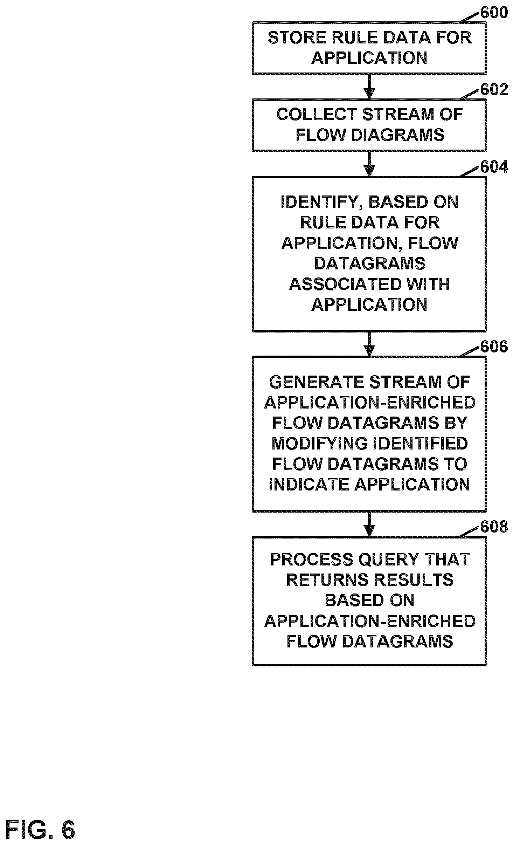

FIG. 6 is a flowchart illustrating an example method in accordance with one or more techniques of this disclosure. Although the example of FIG. 6 is described with respect to the example of FIG. 2, the method of FIG. 6 may be performed in the examples of FIG. 1A or FIG. 1B.

In the example of FIG. 6, rule manager 255 of network analysis system 240 stores rule data for an application (600). The rule data for the application specifies characteristics of flows that occur within a network and that are associated with the application. In the example of FIG. 3, rule manager 255 stores the rule data for the application in rules database 257.

Furthermore, in the example of FIG. 6, collector modules 252 of network analysis system 240 collect a stream of flow datagrams from the network (602). Agents operating on nodes within network 205 may generate the flow datagrams (such as underlay flow datagrams and overlay flow datagrams) and may forward the flow datagrams to collector modules 252. The agents may generate the flow datagrams based on packets transmitted on network 205. The agents may generate and send the flow datagrams according to a protocol, such as sFlow, NetFlow, IPFIX, or another protocol. In some examples, different collector modules 252 may correspond to different protocols. In some examples, different collector modules 252 may be used concurrently for load balancing. In typical examples, the agents do not generate a flow datagram for each packet transmitted on network 205. Rather, the agents may sample the packets transmitted and generate flow datagrams based on the sampled packets transmitted on network 205. For example, an agent may generate a flow datagram based on each *X* packets received by the agent on network 205. Each agent may be a software and/or hardware system implemented on a device, such as spine devices 202, leaf devices 203, or network devices 210 of network 205.

In the example of FIG. 6, collector modules 252 identify, based on the rule data for the application, flow datagrams in the stream of flow datagrams that are associated with the application (604). For example, collector modules 252 may determine whether a flow datagram has the values specified by the rule data for the application.

Collector modules 252 may generate a stream of application-enriched flow datagrams based on the identified flow datagrams (606). The application-enriched flow diagrams may indicate the application. For example, collector modules 252 may modify the identified flow datagrams to include a field that indicates an identifier of the application. In another example, collector modules 252 may generate new flow datagrams based on the identified flow datagrams. In this example, the new flow datagrams do not necessarily include any of the information included in the identified flow datagrams, but collector modules 252 may generate the new flow datagrams in response to identifying one or more flow datagrams that are associated with the application.

Furthermore, in the example of FIG. 6, API server 256 of network analysis system 240 may process a query for results based on the application-enriched flow datagrams (608). API server 256 may receive the query from command interface module 254 or another source. The query may specify selection criteria (and, in some examples, result formatting criteria) for the result data. Because the application-enriched flow data indicates applications, the selection criteria specified by a query may include one or more applications. In this way, API server 256 may be able to process queries for use cases such as determining the top N flows by application. In another example, API server 256 may be able to process queries that use overlay/underlay co-relation to identify the physical and virtual resources the application is using. In this example, API server 256 may filter traffic on the topology of network 205 by application and therefore allow, for example, examination of usage visually (e.g., using a heatmap, tabular data, charts, or another type of data visualization). In some examples, API server 256 may be able to process queries that provide visibility into the path(s) that flow(s) associated with a particular application are using, along with routers and switches along the path(s). In some examples, API server 256 may be able to process queries that provide visibility into the particular users that are using a particular application (e.g., a particular video streaming service) and/or are consuming the most bandwidth associated with that application.

In some examples, the query identifies a timeframe. In such examples, as part of processing the query, API server 256 may identify, based on the timeframe, the one or more network devices that have processed at least one packet associated with the application during the timeframe. In this example, flow database 259 may store data indicating the devices that originated the flow datagrams. Furthermore, in this example, API server 256 may identify devices that have processed a packet associated with the application based on the sources of flow datagrams that are associated with the application.

In some examples, API server 256 may be able to process queries that enable alerts for an application if flows associated with the application meet specific alarm criteria. In other words, network analysis system 240 may determine, based on the results of one or more queries, whether to generate an alert and may generate the alert based on the determination to generate the alert. In such examples, alerts may be configured (e.g., using command interface module 254) for individual applications or groups of applications. Alarm module 260 may automatically initiate queries that return results that the alarm monitoring unit may use to determine whether alarm criteria for an alarm have been satisfied. Alarm criteria may include, for example, whether specific characteristics of a flow cross one or more thresholds (e.g., predetermined thresholds, adaptively determined thresholds, etc.), time periods, Boolean criteria, and so on. The characteristics of the flow may include total volume of packets in a flow associated with an application, volume of packets in a flow associated with an application that passes through a particular node or communication link in network 205, and so on. In one example, alarm module 260 may generate an alert if a video streaming site is exceeding a certain amount of bandwidth. In a similar example, alarm module 260 may generate an alert if the video streaming site exceeds the certain amount of bandwidth for at least a certain amount of time. In some examples, the alert may be in the form of an email message, push notification, log entry, on-screen message, or other form of indicator to a person or computing system.

For processes, apparatuses, and other examples or illustrations described herein, including in any flowcharts or flow diagrams, certain operations, acts, steps, or events included in any of the techniques described herein can be performed in a different sequence, may be added, merged, or left out altogether (e.g., not all described acts or events are necessary for the practice of the techniques). Moreover, in certain examples, operations, acts, steps, or events may be performed concurrently, e.g., through multi-threaded processing, interrupt processing, or multiple processors, rather than sequentially. Further certain operations, acts, steps, or events may be performed automatically even if not specifically identified as being performed automatically. Also, certain operations, acts, steps, or events described as being performed automatically may be alternatively not performed automatically, but rather, such operations, acts, steps, or events may be, in some examples, performed in response to input or another event.

For ease of illustration, only a limited number of devices (e.g., user interface devices 129, spine devices 202, leaf devices 203, network devices 210, network analysis system 240, as well as others) are shown within the Figures and/or in other illustrations referenced herein. However, techniques in accordance with one or more aspects of the present disclosure may be performed with many more of such systems, components, devices, modules, and/or other items, and collective references to such systems, components, devices, modules, and/or other items may represent any number of such systems, components, devices, modules, and/or other items.

Therefore, from one perspective, there have been described approaches in which a computing system can store rule data for an application. The rule data for the application specifies characteristics of flows that occur within a network and that are associated with the application. The computing system may collect a stream of flow datagrams from the network. Additionally, the computing system may identify, based on the rule data for the application, flow datagrams in the stream of flow datagrams that are associated with the application. The computing system may generate a stream of application-enriched flow datagrams based on the identified flow datagrams. The application-enriched flow datagrams include data indicating the application. Furthermore, the computing system may process a query for results based on the application-enriched flow datagrams.

The Figures included herein each illustrate at least one example implementation of an aspect of this disclosure. The scope of this disclosure is not, however, limited to such implementations. Accordingly, other example or alternative implementations of systems, methods or techniques described herein, beyond those illustrated in the Figures, may be appropriate in other instances. Such implementations may include a subset of the devices and/or components included in the Figures and/or may include additional devices and/or components not shown in the Figures.

The detailed description set forth above is intended as a description of various configurations and is not intended to represent the only configurations in which the concepts described herein may be practiced. The detailed description includes specific details for the purpose of providing a sufficient understanding of the various concepts. However, these concepts may be practiced without these specific details. In some instances, well-known structures and components are shown in block diagram form in the referenced figures in order to avoid obscuring such concepts.

Accordingly, although one or more implementations of various systems, devices, and/or components may be described with reference to specific Figures, such systems, devices, and/or components may be implemented in a number of different ways. For instance, one or more devices illustrated in the Figures herein as separate devices may alternatively be implemented as a single device; one or more components illustrated as separate components may alternatively be implemented as a single component. Also, in some examples, one or more devices illustrated in the Figures herein as a single device may alternatively be implemented as multiple devices; one or more components illustrated as a single component may alternatively be implemented as multiple components. Each of such multiple devices and/or components may be directly coupled via wired or wireless communication and/or remotely coupled via one or more networks. Also, one or more devices or components that may be illustrated in various Figures herein may alternatively be implemented as part of another device or component not shown in such Figures. In this and other ways, some of the functions described herein may be performed via distributed processing by two or more devices or components.

Further, certain operations, techniques, features, and/or functions may be described herein as being performed by specific components, devices, and/or modules. In other examples, such operations, techniques, features, and/or functions may be performed by different components, devices, or modules. Accordingly, some operations, techniques, features, and/or functions that may be described herein as being attributed to one or more components, devices, or modules may, in other examples, be attributed to other components, devices, and/or modules, even if not specifically described herein in such a manner.

Although specific advantages have been identified in connection with descriptions of some examples, various other examples may include some, none, or all of the enumerated advantages. Other advantages, technical or otherwise, may become apparent to one of ordinary skill in the art from the present disclosure. Further, although specific examples have been disclosed herein, aspects of this disclosure may be implemented using any number of techniques, whether currently known or not, and accordingly, the present disclosure is not limited to the examples specifically described and/or illustrated in this disclosure.

In one or more examples, the functions described may be implemented in hardware, software, firmware, or any combination thereof. If implemented in software, the functions may be stored, as one or more instructions or code, on and/or transmitted over a computer-readable medium and executed by a hardware-based processing unit. Computer-readable media may include computer-readable storage media, which corresponds to a tangible medium such as data storage media, or communication media including any medium that facilitates transfer of a computer program from one place to another (e.g., pursuant to a communication protocol). In this manner, computer-readable media generally may correspond to (1) tangible computer-readable storage media, which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can include RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transient media, but are instead directed to non-transient, tangible storage media. Disk and disc, as used, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the terms "processor" or "processing circuitry" as used herein may each refer to any of the foregoing structure or any other structure suitable for implementation of the techniques described. In addition, in some examples, the functionality described may be provided within dedicated hardware and/or software modules. Also, the techniques could be fully implemented in one or more circuits or logic elements.

The techniques of this disclosure may be implemented in a wide variety of devices or apparatuses, including a wireless handset, a mobile or non-mobile computing device, a wearable or non-wearable computing device, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a hardware unit or provided by a collection of interoperating hardware units, including one or more processors as described above, in conjunction with suitable software and/or firmware.

## Claims

1. A method for application flow monitoring, the method comprising:
storing, by a computing system, rule data for an application, wherein the rule data for the application specifies characteristics of flows that occur within a network and that are associated with the application;
collecting, by the computing system, a stream of flow datagrams from the network;
identifying, by the computing system, based on the rule data for the application, flow datagrams in the stream of flow datagrams that are associated with the application;
generating, by the computing system, a stream of application-enriched flow datagrams based on the identified flow datagrams, wherein the application-enriched flow datagrams include data that indicate the application; and
processing, by the computing system, a query for results based on the application-enriched flow datagrams.

2. The method of claim 1, wherein the rule data for the application includes one or more of:
a source port,
a destination port,
a source Internet Protocol, IP, address,
a destination IP address, or
a protocol.

3. The method of claim 1 or 2, wherein the rule data for the application includes one or more of:
an overlay source port,
an overlay destination port,
an overlay source IP address,
an overlay destination IP address,
an overlay protocol,
an overlay source Virtual Network, VN, or
an overlay destination VN

4. The method of claim 1, 2 or 3, wherein the stream of flow datagrams conforms to one of the following protocols: sFlow, NetFlow, or IPFIX.

5. The method of any preceding claim, wherein the results specify a top N flows within the network by application.

6. The method of any preceding claim, further comprising:
determining, by the computing system, based on the results, whether to generate an alert; and
generating, by the computing system, the alert based on a determination to generate the alert.

7. The method of any preceding claim, wherein the query identifies a timeframe, and wherein processing the query includes:
identifying, based on the timeframe, the one or more network devices that have processed at least one packet associated with the application during the timeframe.

8. A computing system comprising: one or more processors; and memory storing instructions, the instructions configured to cause the one or more processors to become configured to:
store rule data for an application, wherein the rule data for the application specifies characteristics of flows that occur within a network and that are associated with the application;
collect a stream of flow datagrams from the network;
identify based on the rule data for the application, flow datagrams in the stream of flow datagrams that are associated with the application;
generate a stream of application-enriched flow datagrams based on the identified flow datagrams, wherein the application-enriched flow datagrams include data that indicate the application; and
process a query for results based on the application-enriched flow datagrams.

9. The computing system of claim 8, wherein the rule data for the application includes one or more of:
a source port,
a destination port,
a source Internet Protocol, IP, address,
a destination IP address, or
a protocol.

10. The computing system of claim 8 or 9, wherein the rule data for the application includes one or more of:
an overlay source port,
an overlay destination port,
an overlay source IP address,
an overlay destination IP address,
an overlay protocol,
an overlay source Virtual Network, VN, or
an overlay destination VN

11. The computing system of claim 8, 9 or 10, wherein the stream of flow datagrams conforms to one of the following protocols: sFlow, NetFlow, or IPFIX.

12. The computing system of any of claims 8 to 11, wherein the results specify a top N flows within the network by application.

13. The computing system of any of claims 8 to 12, the instructions further configured to cause the one or more processors to become configured to:
determine based on the results, whether to generate an alert; and
generate the alert based on a determination to generate the alert.

14. The computing system of any of claims 8 to 13, wherein the query identifies a timeframe, and wherein to process the query includes: identifying, based on the timeframe, the one or more network devices that have processed at least one packet associated with the application during the timeframe.

15. A computer-readable medium encoded with instructions that when executed by one or more programmable processors of a computing system, cause the computing system to become configured to perform the method of any of claims 1-7.
